# EUROPEAN PATENT APPLICATION

(11) **EP 1 234 652 A1**
(43) Date of publication of application: **28.08.2002**
(21) Application number: 02251140.6
(22) Date of filing: 20.02.2002
(51) Int. Cl.: B29C 47/10, B29C 47/92

(54) **Structural materials and their manufacturing method**

(30) Priority: 23.02.2001 GB 0104468
(71) Applicant: L.B. Plastics Limited, Belper, Derbyshire DE56 2JJ (GB)
(72) Inventor: Hardy, Terence, c/o L.B. Plastics Ltd., Nether Heage, Derbyshire DE56 2JJ (GB)
(74) Representative: MacMaster, Alan Jeffrey

(57) **Abstract**

A method of producing an extruded article (17) from a composite material incorporating wood and plastics material comprises dry mixing a size-reduced wood-based material and a size-reduced thermoplastic material to produce a homogeneous mixture, and applying heat and pressure to the mixture in an extruder (11) to melt the plastics material and produce an extruded article (17) from the resultant composite material. The composite material comprises a substantially homogeneous mixture of plastics material and wood comprising not less than 30% and not more than 70% by weight of wood. Preferably the material comprises approximately 60% by weight of wood and approximately 40% by weight of plastics material.

## Description

This invention relates to structural materials and particularly to structural materials incorporating both plastics materials and wood based constituents.

Historically many building products such as windows, doors, skirting, cladding and decking were made solely of wood. In more recent times these products have commonly been made from plastics materials. Both materials have their own benefits and drawbacks and wooden and plastic windows and other building components have co-existed for many years.

Wooden building products which are exposed to external weather conditions either require to be protected by painting or the like, if of soft wood construction, or require to be made from hardwoods which have greater weather resistance and are generally stained rather than painted. Hardwoods are, however, expensive and increasingly difficult to obtain. It is also difficult to produce products of complex shape from hardwoods without substantial wastage. Substitution of plastics materials, however, is frequently not acceptable for aesthetic or other reasons.

It has previously been proposed to produce a composite material incorporating polypropylene or polyethylene and wood based constituents. However such materials have not proved to be satisfactory for outdoor use, due primarily to excessive water absorption which results in breakdown of the material after relatively short periods of exposure to weather conditions.

The present invention provides a structural material comprising a substantially homogeneous mixture of plastics material and wood comprising not less than 30% and not more than 70% by weight of wood.

The material preferably consists solely of wood and plastics material but proportions of other materials may be incorporated if desired. Preferably at least 30% by weight of the material comprises plastics material. The preferred composition comprises approximately 60% by weight of wood and approximately 40% by weight of plastics material. The plastics material is preferably polyvinylchloride (PVC).

Preferably the wood component of the material is derived from wood flour, pulverised wood, sawdust or other size-reduced particulate wood product. Preferably the plastics component of the material is derived from powdered, granulated or otherwise, size-reduced plastics material. In producing the material the wood and plastics material are preferably dry mixed. The resulting homogeneous dry mixture may then be used to produce shaped products by extrusion or moulding.

The invention also provides a composition suitable for extrusion or moulding comprising a dry mix of a size-reduced particulate wood product and a size-reduced particulate thermoplastic material, the mix containing from 30% to 70% by weight of the wood product.

The invention also provides a method of producing a composite structural material comprising preparing a size-reduced wood product, preparing a size reduced plastics material, and dry mixing the wood product and plastics material to produce a homogeneous mixture from which articles may be produced by moulding or extrusion.

Preferably the mixture contains not less than 30% and not more than 70% by weight of wood.

Preferably the wood product and plastics material are in powdered or granulated form. The wood product preferably comprises wood flour. The plastics material is preferably PVC.

Preferably the proportion of wood product to plastics material is selected to produce a mix which is readily extrudable by conventional extruding equipment. The material is preferably mixed and extruded sequentially to produce an extruded article.

Accordingly the invention also provides a method of producing an extruded article from a composite material incorporating wood and plastics material comprising dry mixing a size-reduced wood-based material and a size-reduced thermoplastic material to produce a homogeneous mixture, and applying heat and pressure to said mixture in an extruder to melt the plastics material and produce an extruded article from the resultant composite material.

Preferably the wood product is wood flour. The plastics material is preferably PVC.

The invention also provides apparatus for producing an extruded article from a composite material incorporating wood and plastics material, the apparatus comprising a mixing zone, first delivery means for delivering wood based product to said mixing zone, second delivery means for delivering plastics material to said mixing zone, mixing means for dry mixing said wood and plastics material in said mixing zone, and means for delivering the dry mix from said mixing zone to extrusion means in which the dry mix is subjected to heat and pressure and ejected through an extrusion die to form an extruded product.

Preferably said first and second delivery means are drivingly interconnected, the apparatus including control means for varying the rate of delivery of one delivery means relative to the other whereby to introduce different pre-determined quantities of wood product and plastics material into said mixing zone for mixing therein.

Said delivery means preferably comprise rotary auger devices. Said mixing zone may comprise a hopper incorporating said mixing means and from which said dry mix is delivered to said extrusion means.

The invention also provides an article produced from a structural material as aforesaid and an article produced by the method and/or using the apparatus referred to above.

An embodiment of the invention will now be described, by way of example only, with reference to the accompanying diagrammatic drawing, which is a plan view of apparatus for producing an extruded product from a structural material according to the invention.

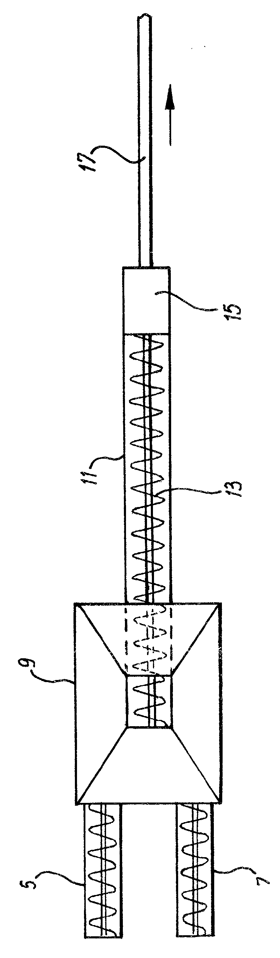

Referring to the drawing, the apparatus includes first and second delivery means in the form of augers 5 and 7 each communicating with a hopper 9 incorporating paddles or other mixing means (not shown). An extruder 11 incorporating an auger 13 is connected to the hopper 9 to receive material therefrom and transport it to an extrusion die 15 from which an extruded product 17 is produced.

The augers 5 and 7 are adapted to be independently driven at different speeds in order to deliver different quantities of product to the hopper 9. For this purpose the augers may be driven by independent electrical or other suitable motors or maybe mechanically interlinked by variable speed gearing to enable both augers to be driven at different speeds from a common power source. The auger 13 in the extruder 11 may be independently driven or may be drivingly connected to the augers 5 and 7 to control the rate of withdrawal of material from the hopper 9 in accordance with the rate of delivery from the augers 5 and 7. The extrusion die 15 incorporates a longitudinally extending bore or cavity of a shape corresponding to the cross-section of the article to be produced which may be, for example, a window or door frame component, decking plank, cladding element or the like. Means (not shown) is provided to support and cool the product 17 emerging from the die 15.

The apparatus is employed to produce extruded products from a composite material comprising wood and plastics components. The wood component is derived from a wood product introduced to the hopper 9 by means of the auger 5 into which it is introduced in a size-reduced form. The wood product is preferably wood flour, but may comprise other wood powder, granulated or otherwise size-reduced wood, or sawdust.

The plastics component of the composite material is derived from a plastics product delivered by the auger 7 to the hopper 9. The plastics product preferably comprises PVC and is delivered to the auger 7 in a powdered, granulated or other size-reduced form. The augers 5 and 7 operate simultaneously to deliver the wood product and the plastics material simultaneously into the hopper 9. The hopper contains paddles or other devices (not shown) which serve to mix the wood and plastics material together to produce a homogeneous dry mix which is then withdrawn from the hopper by the extruder 11.

The dry mix preferably comprises at least thirty per cent by weight of wood product and at least thirty percent by weight of plastics material. In the preferred embodiment the mix comprises approximately sixty per cent by weight of wood product and forty per cent by weight of plastics material. This ratio of plastics material to wood products has been found to be particularly suitable for the production of products from the composite material by extrusion.

The augers 5 and 7 may be independently driven at appropriate speeds to introduce the wood products and plastics material into the hopper 9 in the desired proportions. Alternatively the augers 5 and 7 maybe interlinked and driven at different speeds relative to one another for the same purpose. Once introduced into the hopper 9 the wood product and plastics material are dry mixed and delivered to the extruder 11 through an opening in the hopper bottom.

The extruder 11 is of generally conventional construction and incorporates heating means (not shown) to raise the temperature of the mixture introduced from the hopper 9, resulting in melting of the plastics material to produce a homogeneous extrudable composition which is forced through the extrusion die 15 by the pressure produced by the auger 13. The temperature to which the composition is heated is controlled to ensure melting of the plastics material to a sufficient degree to produce a flowable composition which can be readily extruded through the die 15. The temperature requires to be controlled to ensure there is no burning of the wood product. In tests temperatures of the order of 180° to 200°C have been found to produce satisfactory results.

The product delivered from the die 15 comprises an elongated profile, the cross-section of which corresponds to the shape of the die cavity. The product commences to cool immediately following delivery from the die 15 and can then be withdrawn and cut into suitable lengths. In the case of building products such as window frame components, skirting, architraves or the like, appropriate lengths of the extruded product may be assembled subsequently into window or door frames or the like.

The method and apparatus described are particularly advantageous in that products are produced from the composite material using only one extruder. The composite material is also produced from readily handleable dry products requiring only adequate mixing to produce a homogeneous end product.

Composite materials according to the invention have considerable advantages over previously proposed materials and compared with products made wholly of wood or wholly of plastics materials. From the production point of view the material is produced using a simple dry mix technique from powdered or otherwise size-reduced constituents. The proportion of wood product to plastics material according to the invention results in a product with flow characteristics which render it particularly suitable to production of products by extrusion. In particular it has been found that increasing the wood content beyond seventy per cent produces a material which is not only difficult to extrude but is also unacceptably brittle, resulting in extrusion problems and breakage of the final product.

The material is also particularly attractive to use since by virtue of the proportion of the wood content to plastics material according to the invention, the material has, not only the appearance, but also the feel and general performance of solid wood. This is of particular benefit not only aesthetically, but particularly in terms of performance. Products made from the material can be nailed and screwed without the tendency to split which arises with solid wood products. The material is structurally strong and can be sawn, planed and otherwise treated in the manner of wood while at the same time it has greater weather resistance and does not dry out, warp or split in the manner of wood.

Compared with conventional products made solely of plastics materials, materials according to the invention have the aesthetic appearance of wood and will accept stains and paints. They are also less expensive than both plastics materials and wood and can be formed into complex shapes in the same manner as plastics materials which cannot be attained in wood.

Various modifications may be made without departing from the invention. For example while PVC is the preferred plastics material, other plastics materials may also be employed. The proportions of wood product to plastics material may be varied to suit different requirements while maintaining extrudability and strength. Moreover while the material according to the invention is particularly suited to the production of products by extrusion, it could be used to produce products by moulding or other techniques.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A structural material **characterised in that** it comprises a substantially homogeneous mixture of plastics material and wood comprising not less than 30% and not more than 70% by weight of wood.

2. A material according to claim 1 **characterised in that** it consists solely of wood and plastics material.

3. A material according to claim 1 or 2 **characterised in that** at least 30% by weight of the material comprises plastics material.

4. A material according to claim 3 **characterised in that** it comprises approximately 60% by weight of wood and approximately 40% by weight of plastics material.

5. A material according to any preceding claim **characterised in that** said plastics material is polyvinylchloride (PVC).

6. A material according to any preceding claim **characterised in that** the wood component of the material is derived from a size-reduced, particulate wood product.

7. A material according to claim 6 **characterised in that** said wood product is wood flour.

8. A material according to any preceding claim **characterised in that** it is produced by dry mixing the wood and plastics components.

9. An article **characterised in that** it is made from a structural material according to any preceding claim.

10. A composition suitable for extrusion or moulding **characterised in that** it comprises a dry mix of a size-reduced particulate wood product and a size-reduced particulate thermoplastic material, the mix containing from 30% to 70% by weight of the wood product.

11. A moulding composition according to claim 10 **characterised in that** it comprises approximately 60% by weight of wood flour and approximately 40% by weight of particulate PVC.

12. A structural material **characterised in that** it is produced from a moulding composition according to claim 10 or 11.

13. An article **characterised in that** it is produced from a material according to claim 12.

14. A method of producing a composite structural material **characterised by** preparing a size-reduced wood product, preparing a size reduced plastics material, and dry mixing the wood product and plastics material to produce a homogeneous mixture from which articles may be produced by moulding or extrusion.

15. A method according to claim 14 **characterised in that** the resultant structural material contains not less than 30% and not more than 70% by weight of wood.

16. A method according to claim 14 or 15 **characterised in that** the wood product and plastics material are in powdered or granulated form.

17. A method according to any of claims 14 to 16 **characterised in that** the wood product comprises wood flour.

18. A method according to any of claims 14 to 17 **characterised in that** the plastics material is PVC.

19. A method according to any of claims 14 to 18 **characterised in that** the proportion of wood product to plastics material is selected to produce a mix which is readily extrudable by conventional extruding equipment.

20. A method according to any of claims 14 to 19 **characterised in that** the material is mixed and extruded sequentially to produce an extruded article.

21. A method of producing an extruded article from a composite material **characterised by** dry mixing a size-reduced wood-based material and a size-reduced thermoplastic material to produce a homogeneous mixture, and applying heat and pressure to said mixture in an extruder to melt the plastics material and produce an extruded article from the resultant composite material.

22. A method according to claim 21 **characterised in that** the wood product is wood flour and the plastics material PVC.

23. An article **characterised in that** it is produced by the method of any of claims 14 to 22.

24. Apparatus for producing an extruded article from a composite material **characterised by** a mixing zone (9), first delivery means (5) for delivering wood based product to said mixing zone, second delivery means (7) for delivering plastics material to said mixing zone, mixing means for dry mixing said wood and plastics material in said mixing zone (9), and means for delivering the dry mix from said mixing zone to extrusion means (11) in which the dry mix is subjected to heat and pressure and ejected through an extrusion die (15) to form an extruded product (17).

25. Apparatus according to claim 24 **characterised in that** said first and second delivery means (5, 7) are drivingly interconnected, the apparatus including control means for varying the rate of delivery of one delivery means relative to the other whereby to introduce different pre-determined quantities of wood product and plastics material into said mixing zone (9) for mixing therein.

26. Apparatus according to claim 24 or 25 **characterised in that** said delivery means (5, 7) comprise rotary auger devices.

27. Apparatus according to any of claims 24 to 26 **characterised in that** said mixing zone comprises a hopper (9) incorporating said mixing means and from which said dry mix is delivered to said extrusion means (11).

28. An article **characterised in that** it is produced using the apparatus according to any of claims 24 to 27.
